# EUROPÄISCHE PATENTSCHRIFT

(11) **EP 1 903 238 B1**
(45) Veröffentlichungstag und Bekanntmachung des Hinweises auf die Patenterteilung: **27.03.2013**
(21) Anmeldenummer: 07016250.8
(22) Anmeldetag: 20.08.2007
(51) Int. Cl.: F16D 48/02

(54) **Hydraulisches System**
Hydraulic system
Système hydraulique

(30) Priorität: 21.09.2006 DE 102006044536
(43) Veröffentlichungstag der Anmeldung: 26.03.2008
(73) Patentinhaber: Schaeffler Technologies AG & Co. KG, 91074 Herzogenaurach (DE)
(72) Erfinder: Grethel, Marco, 77830 Bühlertal (DE); Bastian, Uwe, 76571 Gaggenau (DE)

(56) Entgegenhaltungen:
- WO-A1-85/04455
- DE-A1-102005 007 141
- DE-C1- 19 708 597
- JP-A- 63 275 864
- US-A- 3 739 807
- US-B1- 6 315 097

## Beschreibung

Die vorliegende Erfindung betrifft ein hydraulisches System zur Zufuhr eines Hydraulikfluids zu einer Nasskupplung.

Sauggedrosselte Ölpumpen für Nasskupplungen, speziell für Doppelkupplungen, sind beispielsweise aus der DE 10 2005 027610 bekannt. Es handelt sich um sauggedrosselte Pumpen, welche mindestens zwei, meistens drei unterschiedliche Kühlölbedarfe der Nasskupplung bedienen können. Dazu wird eine Ventilfunktion benötigt, die vorzugsweise an oder in der Pumpe integriert ist. Mit einer Ventilstellung, vorzugsweise der Ventilgrundstellung, wird der Kühlölbedarf im Fahrbetrieb abgedeckt. Dieser ist im Vergleich zur aktiven Kühlung beim Anfahren des Fahrzeuges und beim Schalten des Getriebes gering. Für die aktive Kühlung beim Anfahren und Schalten wird eine weitere Ventilstellung verwendet, bei der das Kühlöl ungedrosselt zu der Nasskupplung geleitet wird. In einer dritten Ventilstellung wird beim Synchronisieren der Teilgetriebe bei Parallelschaltgetrieben der Durchfluss des Kühlöls unterbrochen, damit kein Kühlöl zu der Kupplung bzw. den Kupplungen gelangt.

Aus der DE 19708597 ist ein hydraulisches System bekannt, bei dem der Kühlölbedarf eines Verbrauchers mittels eines Überdruckventils oder eines Mehrwegeventils, dessen Steuerkolben mit der Druckseite der Pumpe verbunden ist, gesteuert wird.

DE 10 2005 007 141 zeigt auch ein hydraulisches System. Nachteilig an Lösungen nach Stand der Technik ist eine relativ lange Abschaltzeit des Kühlölstroms. Eine Aufgabe der vorliegenden Erfindung ist es daher, eine Verbesserung der Schaltzeit des Kühlölstroms zu bewirken.

Dieses Problem wird gelöst durch hydraulisches System zur Zufuhr eines Hydraulikfluids, insbesondere eines Kühl- und Schmiermittels wie einem Hydrauliköl, zu einer Nasskupplung, gemäß den Merkmalen des Patentanspruchs 1 oder des Patentanspruchs 2. Bevorzugte Ausgestaltungen der Erfindung sind in den Unteransprüchen angegeben.

Vorzugsweise ist vorgesehen, dass das Steuerventil einen Ventilkolben umfasst, der durch eine Feder mit über dem Federweg abgestufter Federkennlinie in eine Ruhestellung, vorzugsweise eine der Ventilstellungen, gedrückt wird, wobei die Feder mit über dem Federweg abgestufter Federkennlinie bevorzugt eine Parallelschaltung mindestens zweier Federn unterschiedlicher Federlänge im unbelasteten Zustand der Federn ist

Das Steuerventil umfasst bevorzugt eine Ventilstellung, bei der die Saugseite der Pumpe über eine Drossel mit dem Ölreservoir verbunden ist und der mit der Druckseite der Pumpe verbundene Anschluss des Schaltventils gesperrt ist Das Steuerventil umfasst bevorzugt eine weitere Ventilstellung, bei der die Druckseite der Pumpe mit der Saugseite der Pumpe verbunden ist und der mit dem Ölreservoir verbundene Anschluss des Schaltventils gesperrt ist oder mit der Druckseite bzw. Saugseite der Pumpe verbunden ist. Das Steuerventil umfasst bevorzugt eine weitere Ventilstellung, bei der die Saugseite der Pumpe durch die im Ventil integrierte Drossel ungedrosselt aber durch die Saugdrossel drehzahlabhängig gedrosselt mit dem Ölreservoir verbunden ist und der mit der Druckseite der Pumpe verbundene Anschluss des Schaltventils gesperrt ist.

Vorzugsweise ist vorgesehen, dass das hydraulische System einen Ölkühler umfasst, insbesondere einen Ölkühler, der zwischen der Druckseite der Pumpe und der Nasskupplung angeordnet ist, wobei ein Abzweig zur Verbindung der Druckseite der Pumpe mit dem Steuerventil in Durchflussrichtung hinter dem Ölkühler angeordnet ist. Vorzugsweise ist weiter vorgesehen, dass das hydraulische System ein Ölfilter umfasst, insbesondere ein Ölfilter, der zwischen Ölreservoir und Schaltventil angeordnet ist. Auf der Saugseite der Pumpe ist bevorzugt eine Saugdrossel angeordnet, die vorzugsweise stromab des Schaltventils angeordnet ist.

Vorzugsweise ist vorgesehen, dass an dem Öleinlass der Nasskupplung ein Rückschlagventil angeordnet ist; welches bevorzugt zwischen dem Öleinlass der Nasskupplung und einem Knotenpunkt, der einen Abzweig für den Bypass bildet, angeordnet ist. Das Rückschlagventil öffnet vorzugsweise in Durchflussrichtung von dem Knotenpunkt zum Öleinlass, wobei das Rückschlagventil in Durchflussrichtung bevorzugt bei einem Minimaldruck öffnet, wobei der Minimaldruck größer als der maximale Saugdruck der Nasskupplung ist. Der Minimaldruck beträgt beispielsweise etwa 0,2 bar.

Das eingangs genannte Problem wird auch gelöst durch ein Schaltventil zur Verwendung in einem erfindungsgemäßen hydraulischen System wobei das Steuerventil einen Ventilkolben umfasst, der durch eine Feder mit über dem Federweg abgestufter Federkennlinie in eine der Ventilstellungen gedrückt wird. Vorzugsweise ist vorgesehen, dass die Feder mit über dem Federweg abgestufter Federkennlinie eine Parallelschaltung mindestens zweier Federn unterschiedlicher Federlänge im unbelasteten Zustand der Federn ist. Vorzugsweise ist weiter vorgesehen, dass das Steuerventil ein 3/-Wegeventil ist, wobei ein Anschluss mit dem Ölreservoir, ein Anschluss mit der Saugseite der Pumpe und ein Anschluss mit der Druckseite der Pumpe verbunden ist.

Vorzugsweise ist weiter vorgesehen, dass das Steuerventil ein 3/3-Wegeventil ist, wobei das Steuerventil eine Ventilstellung umfasst, bei der die Saugseite der Pumpe über eine Drossel mit dem Ölreservoir verbunden ist und der mit der Druckseite der Pumpe verbundene Anschluss des Schaltventils gesperrt ist sowie eine Ventilstellung, bei der die Druckseite der Pumpe mit der Saugseite der Pumpe verbunden ist und der mit dem Ölreservoir verbundene Anschluss des Schaltventils entweder gesperrt ist oder ebenfalls mit der Druck- bzw. Saugseite der Pumpe verbunden ist und eine Ventilstellung, bei der die Saugseite der Pumpe ungedrosselt mit dem Ölreservoir verbunden ist und der mit der Druckseite der Pumpe verbundene Anschluss des Schaltventils gesperrt ist.

Alternativ ist vorgesehen, dass das Steuerventil ein 4/-Wegeventil, insbesondere ein 4/3-Wegeventil, ist, wobei ein Anschluss mit dem Ölreservoir, ein Anschluss mit der Saugseite der Pumpe, ein Anschluss mit der Druckseite der Pumpe und ein Anschluss mit dem Öleinlass der Nasskupplung verbunden ist.

Gegenüber einem auf der Druckseite der Pumpe angeordneten Steuerventil fällt bei der erfindungsgemäßen Lösung ein zweiter Schaltmagnet weg. Der Ölstrom wird nach der Pumpe und einem eventuellen Ölkühler erneut durch das Steuerventil geführt, so dass eine Abschaltfunktion für das Öl sehr nahe an der Nasskupplung platziert werden kann. Bei dem erfindungsgemäßen hydraulischen System sind zwei Anordnungen mit zwei Funktionsvarianten realisierbar. Zum einen kann der von der Pumpe kommende Ölstrom an dem Steuerventil wahlweise der Kupplung oder dem Tank zugeführt werden, alternativ kann der Ölstrom wahlweise der Kupplung zugeführt oder mittels eines Bypasses an die Saugseite der Pumpe zurückgeführt werden. In beiden Fällen wird ein Ventil mit drei Schaltpositionen benötigt. Entgegen üblicher Ventilanordnungen mit drei Funktionsbereichen bzw. Schaltstellungen wird hier zusätzlich auf einen so genannten Proportionalmagneten verzichtet, es wird ein reiner Schaltmagnet verwendet, so dass auch das Schaltventil nur drei Schaltstellungen und keine beliebigen Zwischenstellungen einnehmen kann. Die Schaltposition wird durch eine Federanordnung mit zwei Federn statt einer Feder realisiert. Die zweite Feder ist dabei so vorgespannt, dass sie bei einem mittleren Kraftniveau bzw. einem mittleren Magnetstrom des Schaltmagneten als Anschlag wirkt. Bei einer weiteren Kraft bzw. Stromsteigerung wird die Vorspannkraft überwunden und das Ventil schaltet in seine dritte Position.

Im Folgenden werden Ausführungsbeispiele der Erfindung anhand der beiliegenden Zeichnungen erläutert. Dabei zeigen:
- Fig. 1: eine schematische Darstellung eines Ausführungsbeispieles eines hydraulischen Systems zur Ölzufuhr einer Nasskupplung;
- Fig. 2: einen Hydraulikschaltplan für das Ausführungsbeispiel gemäß Fig. 1;
- Fig. 3: ein ersten Ausführungsbeispiel eines erfindungsgemäßen hydraulischen Systems zur Ölzufuhr einer Nasskupplung;
- Fig. 4: einen Hydraulikschaltplan für das Ausführungsbeispiel gemäß Fig. 3;
- Fig. 5: ein zweites Ausführungsbeispiel eines erfindungsgemäßen hydraulischen Systems;
- Fig. 6: ein drittes Ausführungsbeispiel eines erfindungsgemäßen hydraulischen Systems;
- Fig. 7: eine Prinzipdarstellung der Funktionsweise des 3/3-Wegeventils gemäß Fig. 5 und 6 in einer ersten Ventilstellung;
- Fig. 8: eine Darstellung gemäß Fig. 7 in einer zweiten Stellung des 3/3-Wegeventils;
- Fig. 9: eine Darstellung gemäß Fig. 7 in einer dritten Stellung des 3/3-Wegeventils;
- Fig. 10: ein Diagramm der Aktorkraft F über dem Weg s des Ventilkolbens;
- Fig. 11: ein hydraulisches System gemäß Fig. 3 mit einem Rückschlagventil.

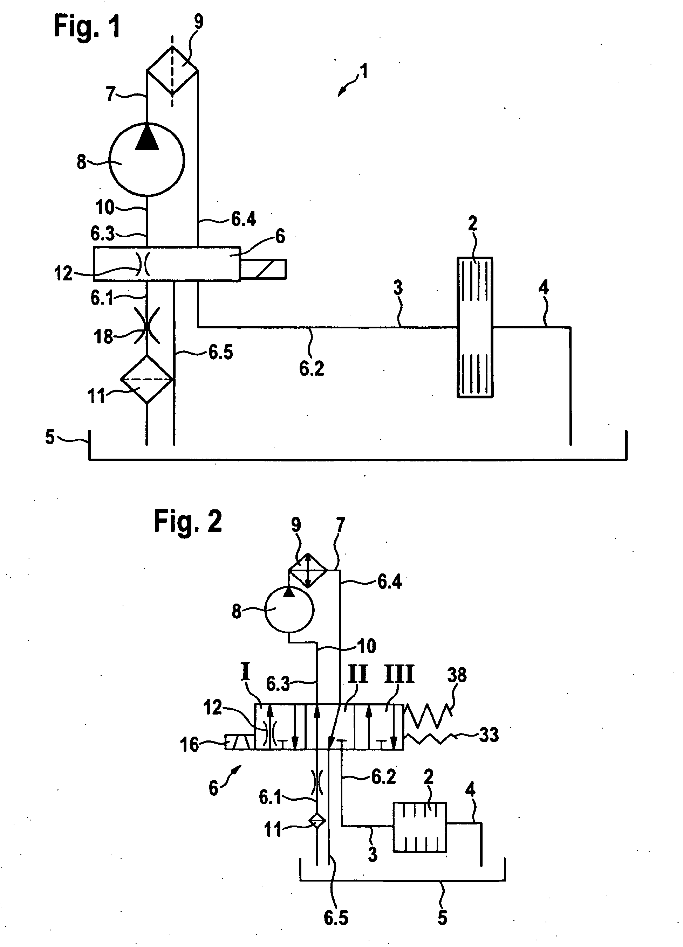

Fig. 1 zeigt eine Prinzipskizze und Fig. 2 einen Hydraulikschaltplan eines Ausführungsbeispiels eines hydraulischen Systems 1 zur Versorgung einer Nasskupplung 2 mit einem Hydrauliköl als Öl bzw. Kühl- und Schmiermittel. Die Darstellung in Fig. 2 sowie der nachfolgenden Figuren folgt der in DIN ISO 1219 gebräuchlichen Darstellungsweise, ein Ventil ist also durch ein Rechteck dargestellt, einzelne Ventilstellungen sind durch Quadrate dargestellt, Anschlüsse sind Linien, die von dem Ventilgrundkörper abgehen, Verbindungen der Anschlüsse untereinander sind durch Pfeile dargestellt, gesperrte Anschlüsse sind durch ein T dargestellt, eine Drosselwirkung in Durchflussrichtung ist durch zwei an den Durchflusspfeil angelegte gekrümmte Linien dargestellt. Das Hydrauliköl ist insbesondere Kühlöl, das in einem eigenen Kupplungskreislauf gehalten sein kann oder zum Schmierölkreislauf, beispielsweise eines Getriebes gehört. Das Getriebe selbst ist hier nicht dargestellt, die Nasskupplung 2 ist in bekannter Art und Weise als Einzelkupplung oder Doppelkupplung im Antriebsstrang eines Kraftfahrzeuges zwischen einer nicht dargestellten Kurbelwelle einer Brennkraftmaschine und der Eingangswelle eines Untersetzungsgetriebes bzw. den Eingangswellen eines Doppelkupplungsgetriebes angeordnet. Bei einem Doppelkupplungsgetriebe sind selbstverständlich zwei Nasskupplungen vorhanden. Der Einfachheit halber dargestellt wird im Ausführungsbeispiel der Fig. 1 sowie in allen nachfolgenden Ausführungsbeispielen nur eine Nasskupplung 2. Sowohl die Drehmomentübertragung als auch die eigentliche Kupplungsbetätigung ist in den Ausführungsbeispielen nicht dargestellt, es wird hier lediglich der Kühl- und Schmiermittelkreislauf, nachfolgend als Hydraulikkreis bezeichnet, erläutert. Die Nasskupplung bzw. ein Gehäuse der Nasskupplung 2 umfasst einen Öleinlass 3, über den das Öl unter Druck zugeführt wird, sowie ein Ölauslass 4, über den das Öl in ein Ölreservoir 5 abgeführt wird. Das Ölreservoir 5 kann beispielsweise ein Ölsumpf oder ein vergleichbar ausgebildeter Bereich des Kupplungsgehäuses sein, in dem Öl gehalten wird. Der Öleinlass 3 ist über ein Steuerventil 6 sowie ein Ölkühler 9 mit der Druckseite 7 einer Pumpe 8 verbunden. Eine Saugseite 10 der Pumpe 8 ist über einen weiteren Ausgang des Steuerventils 6 über einen Ölfilter 11 mit dem Ölreservoir 5 verbunden. Das Steuerventil 6 ist im Ausführungsbeispiel der Fig. 1 ein 5/-Wegeventil und umfasst einen Anschluss 6.3, der mit der Saugseite 10 der Pumpe 8 verbunden ist, ein Anschluss 6.4, der mit dem Ausgang des Ölkühlers 9, der wiederum mit der Druckseite 7 der Pumpe 8 verbunden ist, einen Anschluss 6.1, der über die Drossel 18 und den Ölfilter 11 mit dem Ölreservoir 5 verbunden ist, einen Anschluss 6.5, der direkt mit dem Ölreservoir verbunden ist, sowie ein Anschluss 6.2, der mit dem Öleinlass 6 der Nasskupplung 2 verbunden ist. Das Steuerventil 6 im Ausführungsbeispiel der Fig. 1 ist ein 5/3-Wegeventil, es umfasst also drei verschiedene Ventilstellungen. In einer ersten Ventilstellung I ist der Anschluss 6.1 über eine Drossel mit dem Anschluss 6.3 und der Anschluss 6.4 direkt mit dem Anschluss 6.2 verbunden, es findet also ein direkter Kühlflüssigkeitsstrom über den Ölfilter 11, die Pumpe 8, den Ölkühler 9 zur Nasskupplung 2 und wieder zurück zum Ölreservoir 5 statt. Eine Drossel 12 ist beispielsweise in einen Steuerkolben des Steuerventils 6 integriert, um die Funktion einer Saugdrossel zu erfüllen. In einer zweiten Ventilstellung II findet der gleiche Durchfluss wie in der zuvor dargestellten Ventilstellung statt, allerdings ist die Funktion der Drossel 12 deaktiviert, diese wird beispielsweise überbrückt. In einer dritten Ventilstellung ist der Anschluss 6.4 statt mit dem Anschluss 6.2 mit dem Anschluss 6.5 verbunden, das Öl wird also nicht zur Nasskupplung 2 geführt, sondern direkt wieder in das Ölreservoir 5 zurückgeführt.

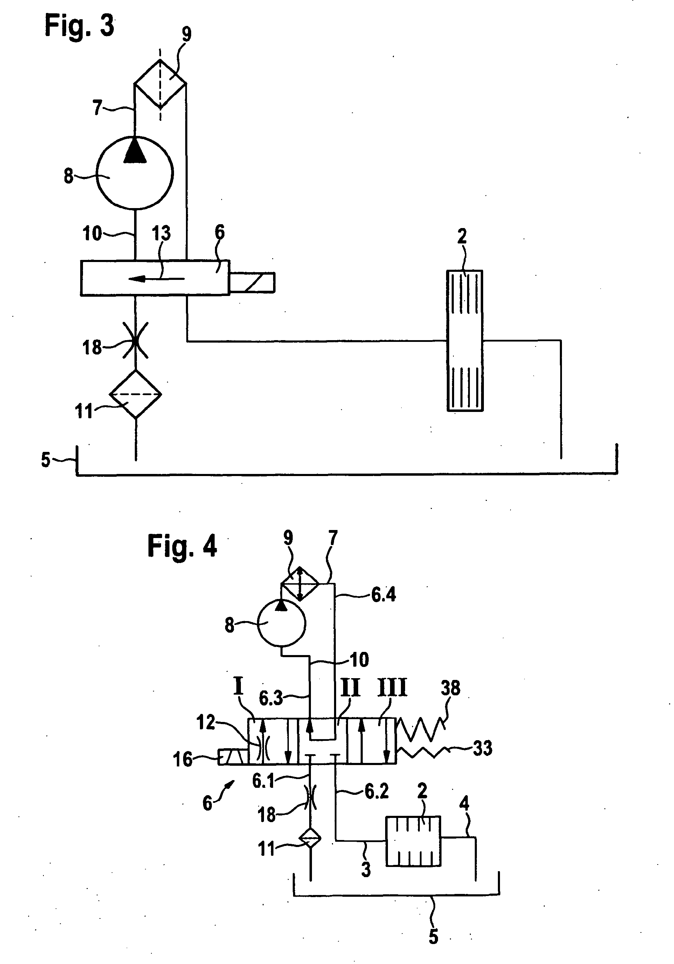

Fig. 3 und 4 zeigen ein ersten Ausführungsbeispiel eines erfindungsgemäßen hydraulischen Systems. Das Steuerventil ist hier ein 4/3-Wegeventil. Ein Anschluss 6.1 ist mit dem Ölreservoir 5 , ein Anschluss 6.3 ist mit der Saugseite 10 der Pumpe 8, ein Anschluss 6.4 ist mit der Druckseite 7 der Pumpe 8 und ein Anschluss 6.2 ist mit dem Öleinlass 3 der Nasskupplung 2 verbunden. Im Unterschied zu dem Ausführungsbeispiel der Fig. 1 und 2 wird das Öl hier in einer Ventilstellung II, in der die Nasskupplung 2 nicht mit Öl beaufschlagt werden soll, nicht in das Ölreservoir 5 zurückgeführt, sondern im Sinne eines Bypasses von der Druckseite 7 wieder zur Saugseite 10 der Pumpe 8 zurückgeführt. Dies ist durch einen Pfeil 13 in Fig. 3 und eine Verbindung zwischen den Anschlüssen 6.3 und 6.4 bei Ventilstellung II in Fig. 4 dargestellt.

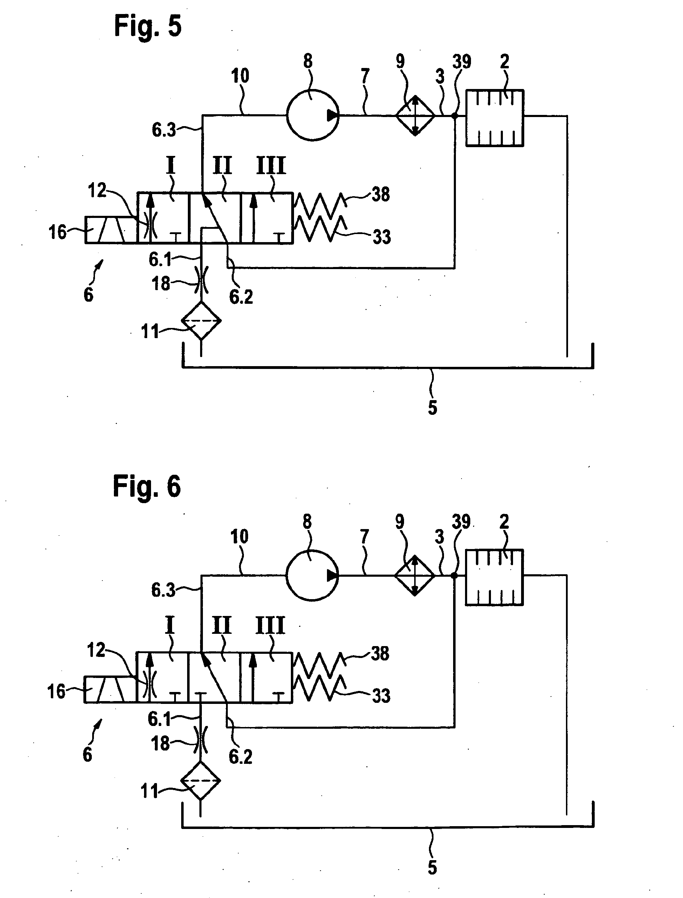

Fig. 5 und 6 zeigen ein weiteres Ausführungsbeispiel eines erfindungsgemäßen hydraulischen Systems. Der Hydraulikschaltplan gemäß Fig. 5 und 6 folgt grundsätzlich den Ausführungsbeispielen der Fig. 1 bis 4. Aus dem Ölreservoir 5 wird über das Steuerventil 6, eine Pumpe 8 und einen Ölkühler Öl zu der Nasskupplung 2 zugeführt, und von dieser wieder in das Ölreservoir 5 zurückgeführt. Das Steuerventil 6 umfasst drei Anschlüsse, diese sind hier als 6.1, 6.2 sowie 6.3 gezeichnet. Ein Ventilkolben weist Bohrungen, Nuten, Ausnehmungen oder dergleichen auf um in verschiedenen Schaltstellungen unterschiedliche Anschlüsse miteinander hydraulisch zu verbinden. Der Anschluss 6.1 ist über die Drossel 18 und den Ölfilter 11 mit dem Ölreservoir 5 verbunden. Der Anschluss 6.2 ist mit einem Knotenpunkt 39 (Abzweigung) zwischen dem Öleinlass 3 der Nasskupplung 2 und dem Ölkühler 9 verbunden. Der Anschluss 6.3 ist mit der Saugseite 10 der Pumpe 8 verbunden, deren Druckseite 7 über den Ölkühler 9 mit dem Öleinlass 3 der Nasskupplung 2 verbunden ist. Das Steuerventil 6 ist hier ein 3/3-Wegeventil. Die drei Ventilstellungen des Ventilkolbens sind mit I, II sowie III bezeichnet. In der Ventilstellung I ist der Anschluss 6.1 über eine Drossel 12, die in das Steuerventil 6 integriert ist, mit der Saugseite 10 der Pumpe 8 verbunden. Der Anschluss 6.2 ist gesperrt. In der Ventilstellung II ist bei dem Ausführungsbeispiel der Fig. 6 der Anschluss 6.2 mit dem Anschluss 6.3 verbunden, der Öleinlass 3 ist also direkt mit der Saugseite 10 der Pumpe 8 verbunden, die Pumpe 8 ist dadurch kurzgeschlossen. Bei dem Ausführungsbeispiel der Fig. 5 ist der Anschluss 6.2 ebenfalls mit dem Anschluss 6.3 verbunden, zusätzlich ist der Anschluss 6.1 mit dem Anschluss 6.2 verbunden. Dadurch ist die Pumpe 8 ebenfalls kurzgeschlossen, gleichzeitig ist dieser Kreislauf mit dem Ölreservoir 5 verbunden. Das Ventil kann dadurch günstig mit kurzen Schaltwegen gebaut werden. In der Ventilstellung III ist der Anschluss 6.1 mit dem Anschluss 6.2 verbunden, ohne dass eine zusätzliche Drosselwirkung besteht, der Anschluss 6.2 ist gesperrt. In der Ventilstellung I findet also ein Öldurchfluss durch die Nasskupplung 2 über eine Drossel 12 statt, in der Ventilstellung II ist die Pumpe 8 kurzgeschlossen, in der Ventilstellung III findet ein Öldurchfluss durch die Nasskupplung 2 statt, ohne dass die Drossel 12 eine Drosselwirkung entfaltet. In der Ventilstellung I fließt ein minimaler Volumenstrom an Öl durch die Nasskupplung 2, in der Ventilstellung II fließt kein Öl durch die Nasskupplung 2, in der Ventilstellung III fließt ein von der Pumpenleistung der Pumpe 8 und der Saugdrossel 18 abhängiger Volumenstrom an Öl durch die Nasskupplung 2.

Das Steuerventil 6 wird durch eine erste Kolbenfeder 33 und eine zweite Kolbenfeder 38 in eine der Endstellungen, hier die Schaltstellung I, als Ruhestellung gedrückt. Die Kolbenfedern 33, 38 sind so angeordnet, dass eine Bewegung von Schaltstellung I in jede Zwischenstellung des Ventilschiebers gegen die Kraft der ersten Kolbenfeder 33 erfolgt. Mit erreichen der Ventilstellung II, der Mittelstellung, schlägt auch die zweite Kolbenfeder 38 an den Ventilschieber an, so dass die auf den Ventilschieber wirkende Rückstellkraft sprunghaft ansteigt. Die Kolbenfedern 33 und 38 bilden zusammen eine Feder mit über dem Federweg abgestufter Federkennlinie, die also über einen ersten Federweg, hier die Verschiebung des Ventilschiebers von Schaltstellung I in Schaltstellung II eine erste geringere Federkonstante aufweist, in der Ventilstellung II einen Sprung in der Federkraft aufweist und im weiteren Federweg, der Verschiebung des Ventilschiebers von Schaltstellung II in Schaltstellung III eine zweite Federkonstante aufweist. Dies kann beispielsweise durch eine Parallelschaltung zweier Federn erfolgen, wobei eine der Federn erst nach Überschreiten eines bestimmten Weges des Ventilkolbens betätigt wird, bei Druckfedern also erst nach Überschreiten des bestimmten Weges zusammengedrückt wird und zudem vorgespannt ist. Ein Schaltmagnet 16 bewegt einen Ventilkolben des Steuerventils 6 in die beiden anderen Schaltstellungen, dies sind die Schaltstellungen I und III. Bei unbestromtem Schaltmagneten 16 liegt die Ventilstellung I an, bei mittlerer Bestromung liegt die Ventilstellung II an, bei maximaler Bestromung liegt die Ventilstellung III an. Im Unterschied zu einem Proportionalventil bedarf es keiner Wegregelung des Schaltmagneten, da die Bestromungen zwischen keiner, mittlerer und maximaler Bestromung so große Unterschiede aufweisen, dass hier eine Steuerung über einen ungeregelten Schalter zur Ansteuerung ausreicht.

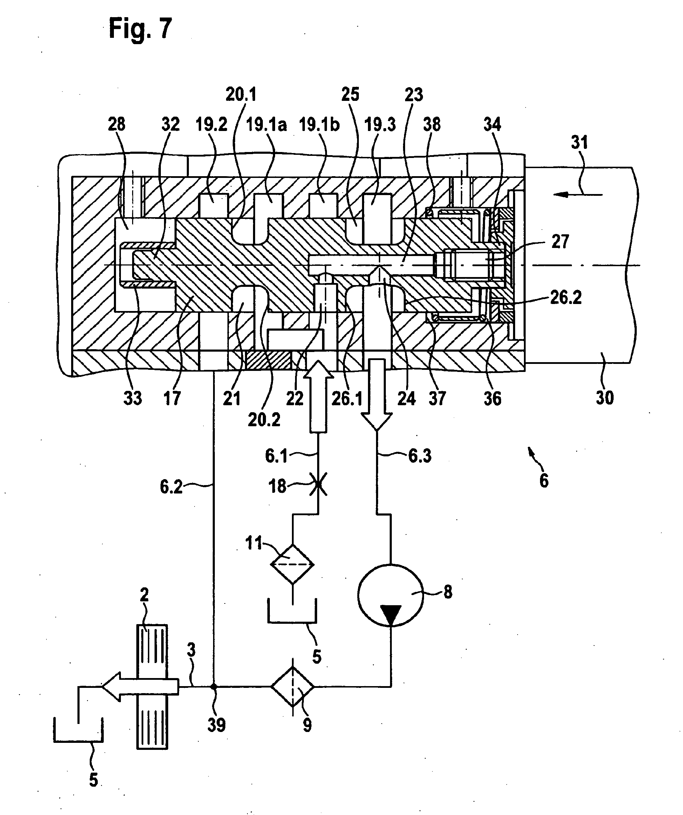

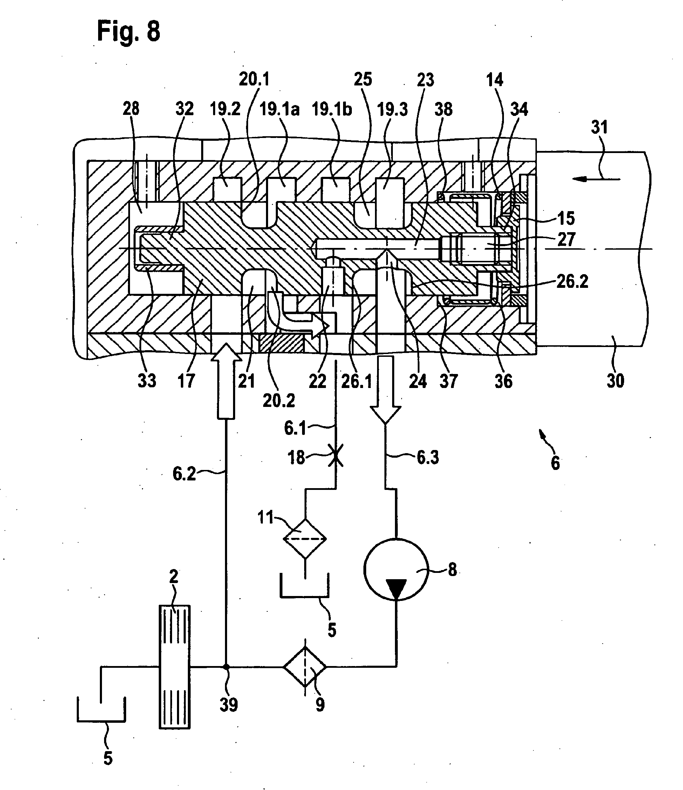

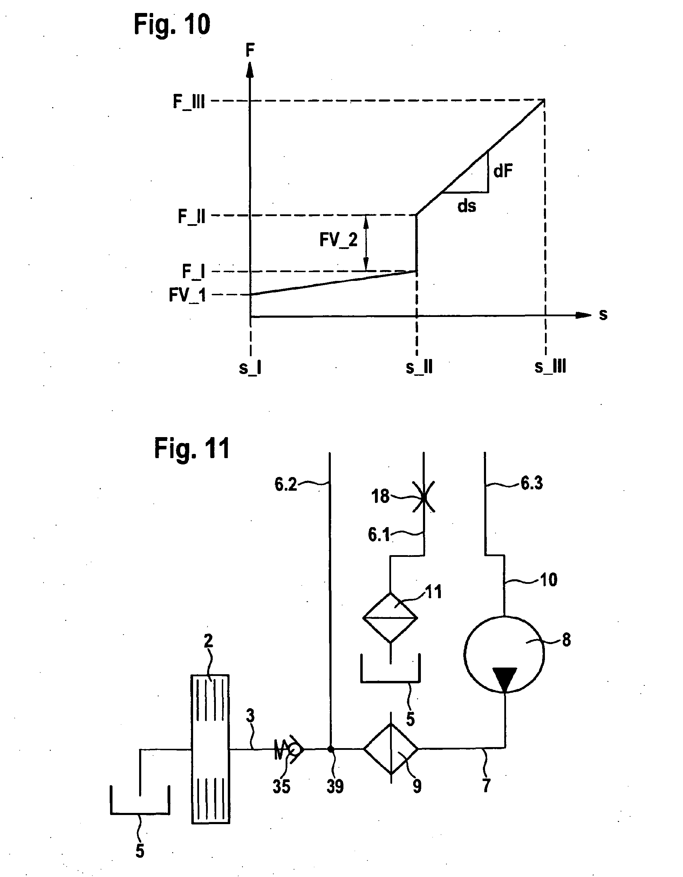

Die Fig. 7 bis 9 zeigen ein Ausführungsbeispiel eines erfindungsgemäßen Steuerventils 6 in den drei verschiedenen Ventilstellungen. Fig. 7 zeigt ein Steuerventil 6 im Schnitt. Das Steuerventil 6 umfasst eine Bypassrückführung zwischen Saugdrosselstelle für die Minimalkühlölmenge und der Saugdrosselstelle für die Maximalkühlölmenge. In der in Fig. 7 dargestellten Ventilgrundstellung wird das Öl im Ölfilter (Saugfilter) 11 von einer in der Ansaugleitung des Anschlusses 6.1 oder in dem Ventilkolben 17 angeordneten Saugdrossel (Blende) 18 von der Pumpe 8 angesaugt. Die Anschlüsse sind mit 6.1, 6.2 und 6.3 wie in der Prinzipskizze der Fig. 3 bezeichnet. Der Anschluss 6.3 ist über die Pumpe 8 und den Ölkühler 9 mit der Nasskupplung 2 verbunden, die wiederum mit dem Ölreservoir 5 verbunden ist. Der Anschluss 6.1 ist über die Saugdrossel 18 und den Ölfilter 11 mit dem Ölreservoir 5 verbunden. Der Anschluss 6.2 ist mit dem Knotenpunkt 39 zwischen dem Öleinlass 3 und dem Ölkühler 9 verbunden. Der Ventilkolben 17 umfasst mehrere Steuerkanten, die mit Lamellen, die den Anschlüssen 6.1, 6.2 und 6.3 zugeordnet sind, zusammenwirken. Dem Anschluss 6.2 ist eine Lamelle 19.2 zugeordnet, die hier als umlaufende Ringnut ausgebildet ist. Dem Anschluss 6.1 sind zwei Lamellen 19.1a und 19.1b, die hydraulisch miteinander verbunden sind und ebenfalls als umlaufende Ringnuten ausgebildet sind, zugeordnet. Dem Anschluss 6.3 ist eine Lamelle 19.3 zugeordnet, die ebenfalls als umlaufende Ringnut ausgebildet ist. Der Ventilkolben 17 umfasst eine erste Steuerkante 20.1 sowie eine zweite Steuerkante 20.2, zwischen denen eine umlaufende Ringnut 21 angeordnet ist. Die erste Steuerkante 20.1 wirkt mit der ersten Lamelle 19.1 zusammen, die zweite Steuerkante 20.2 wirkt mit der zweiten Lamelle 19.1 a zusammen. Durch Verschieben des Ventilkolbens 17 kann eine hydraulisch leitende Verbindung zwischen den Lamellen 19.1a und 19.1 b hergestellt werden. Der Ventilkolben 17 umfasst des Weiteren eine Bohrung 22, die über eine Axialbohrung 23 und eine zweite Bohrung 24 in eine weitere umlaufende Ringnut 25 übergeht. Die zweite umlaufende Ringnut 25 umfasst Steuerkanten 26.1 und 26.2. Die Axialbohrung 23 wird durch einen Schraubstopfen 27 nach außen hin abgedichtet. Der im Wesentlichen zylindrische Ventilkolben 17 ist in einer zylindrischen Bohrung 28 eines Ventilgehäuses 29 aufgenommen. Ein Schaltmagnet 30 übt bei Bestromung eine Schaltkraft F in Richtung des Pfeils 31 auf den Ventilkolben 17 aus. Der Ventilkolben 17 umfasst an seinem dem Schaltmagneten 30 abgewandten Ende einen Zapfen 32, über den die erste Kolbenfeder 33 gestülpt ist, welche sich an dem Getriebegehäuse 29 abstützt. Eine Bewegung des Ventilkolbens 17 in Richtung des Pfeils 31 ist gegen die Kraft der als Druckfeder ausgelegten ersten Kolbenfeder 33 möglich. An der dem Schaltmagneten 30 zugewandten Seite ist ein weiterer Zapfen 34 angeordnet. In das Ventilgehäuse 29 ist an der dem Schaltmagneten 30 zugewandten Seite eine Stufenbohrung 36, die einen größeren Innendurchmesser als der Außendurchmesser des Ventilkolbens 17 aufweist, angeordnet. Die zweite Kolbenfeder 38, die ebenfalls als Druckfeder ausgelegt ist, stützt sich an einem Boden 37 der Stufenbohrung 36 und an dem Ventilkolben 17 ab. In Fig. 7 ist die Stellung I gemäß Fig. 5 bzw. Fig. 6 des Steuerventils 6 dargestellt. In dieser Ventilstellung befindet sich der Ventilkolben 17 in seiner rechten Endstellung, wobei rechts bezogen ist auf die Draufsicht gemäß der Darstellung der Fig. 7. Der Ventilkolben 17 befindet sich also in der Endstellung, in der dieser möglichst weit zum Schaltmagneten 30 hinbewegt ist. Diese Endstellung wird durch die Wirkung der ersten Kolbenfeder 33 eingenommen, die den Ventilkolben 17 in die rechte Endstellung drückt. Die erste Kolbenfeder ist dazu vorgespannt, diese übt also auch in der Endstellung des Ventilkolbens 17 eine Kraft auf diesen aus. In der Ventilstellung I erfolgt ein Strom des Öls über den Anschluss 6.1 zum Anschluss 6.3. Der Anschluss 6.2 ist gesperrt. Die Bohrung 22 zusammen mit der Axialbohrung 23 und der zweiten Bohrung 24 bildet die Drossel 12. Wird der Schaltmagnet 30 betätigt, so erfolgt eine Bewegung des Ventilkolbens 17 in Richtung des Pfeils 31 gegen die Kraft der ersten Kolbenfeder 33. Die zweite Kolbenfeder 38 wirkt mit einen Federteller 14 und einem Federmitnehmer 15 zusammen. Der Federteller 14 und der Federmitnehmer 15 kommen erst nach einem gewissen Stellweg in Kontakt, wie dies weiter unten anhand Fig. 10 erläutert ist. In der in Fig. 8 dargestellten Mittelstellung, dies entspricht der Ventilstellung II, kommen Federteller 14 und Federmitnehmer 15 gerade in Kontakt, bei einer weiteren Bewegung des Ventilkolbens 17 in Pfeilrichtung 31 wird die zweite Kolbenfeder 38 weiter zusammengedrückt. Die zweite Kolbenfeder 38 ist ebenfalls vorgespannt und ggf. steifer als die erste Kolbenfeder 33.

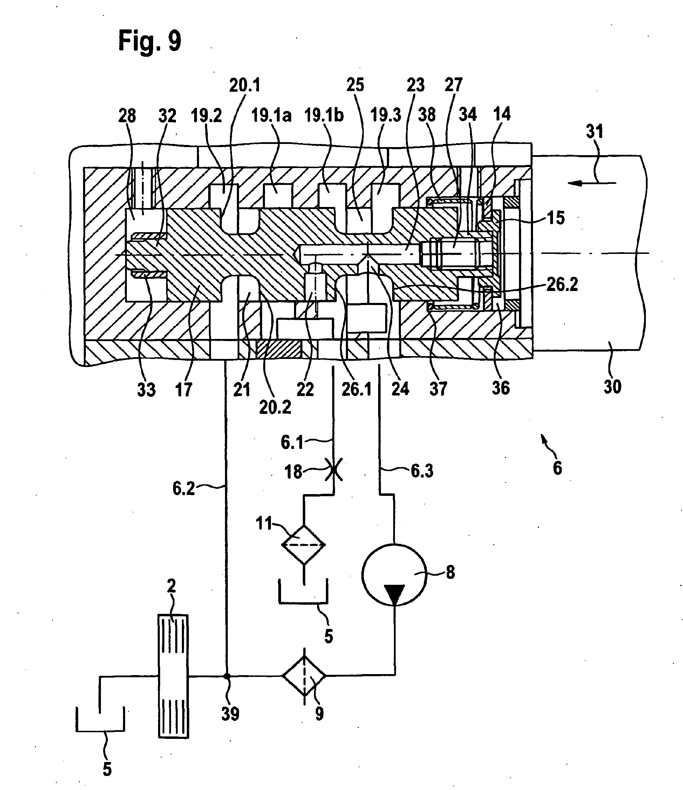

In der Ventilstellung II gemäß Fig. 8, der Mittelstellung des Ventilkolbens 17, ist der Anschluss 6.2 über die Lamelle 19.2, die umlaufende Ringnut 21 und die Lamelle 19.1a mit der Lamelle 19.1 b und damit dem Anschluss 6.1 verbunden. Diese ist wiederum über die Bohrungen 22, 23 sowie 24 mit der Lamelle 19.3 und damit dem Anschluss 6.3 verbunden. Somit ist der Anschluss 6.2 mit dem Anschluss 6.3 verbunden, so dass ein Bypass für die Pumpe 8 vorhanden ist. Das Öl wird durch die Pumpe 8 damit nur noch über den Bypass gepumpt, die Drossel 12, die aus den Bohrungen 22, 23 und 24 gebildet ist, begrenzt den Volumenstrom. Es findet kein Volumenstrom mehr über die Nasskupplung 2 statt. In Fig. 9 schließlich ist die Stellung I-II, die linke Endstellung des Ventilkolbens 17, dargestellt. Zum Erreichen der Ventilstellung III muss neben der Kraft der ersten Kolbenfeder 33 die Federkraft der zweiten Kolbenfeder 38 überwunden werden. Dazu ist eine wesentlich höhere Kraft als zum Überwinden der Federkraft der ersten Kolbenfeder 33 allein notwendig. In dieser Ventilstellung ist der Anschluss 6.3 gesperrt, dafür ist der Anschluss 6.1 über die Lamelle 19.1 b und die zweite umlaufende Ringnut 25 direkt mit der Lamelle 19.3 und damit dem Anschluss 6.3 verbunden. In dieser Ventilstellung saugt die Pumpe 8 ungedrosselt über den Ölfilter 11 Öl aus dem Ölreservoir 5, welches auf der Druckseite 7 der Pumpe 8 über den Ölkühler 9 der Nasskupplung 2 zugeführt wird und von dieser wieder zurück in das Ölreservoir 5.

Die erste Kolbenfeder 33 und die zweite Kolbenfeder 38 sind derart angeordnet, dass bis zum Erreichen der Mittelstellung, dies ist die Schaltstellung II, nur die Kraft der ersten Kolbenfeder 33 überwunden werden muss und zum Erreichen der linken Endstellung, das ist die Schaltstellung III, zusätzlich die Kraft der zweiten Kolbenfeder 38 überwunden werden muss. Die zweite Kolbenfeder wird dabei erst nach Zurücklegen eines Weges s_II des Ventilkolbens 17 zusammengedrückt, so dass diese erst bei Überschreiten des Weges s_II eine zusätzliche Rückstellkraft auf den Ventilkolben 17 ausübt. Bei unbestromtem Schaltmagneten 30 wird durch die Kraft der ersten Kolbenfeder 33 die Schaltstellung I, also die rechte Endstellung gemäß Fig. 7 bis 9, eingenommen. Bei unbestromtem Schaltmagneten wird also die Stellung I eingenommen, bei einer mittleren Bestromung des Schaltmagneten 30 wird die Schaltstellung II und mit einer Maximalbestromung des Schaltmagneten 30 die Endstellung III eingenommen. Der Unterschied zwischen einer mittleren Bestromung und einer maximalen Bestromung des Schaltmagneten 30 ist so hoch, dass hier keine Regelung der Bestromung notwendig ist. Das Schaltventil 6 wird also nicht als Proportionalventil betrieben, sondern als reines Schaltventil.

Die Aktorkraft F zur Bewegung des Ventilkolbens über dem Weg s des Ventilkolbens ist in Fig. 10 dargestellt. Die Aktorkraft F beginnt bei einem Weg s_I (Ventilstellung I) mit einer Vorspannkraft FV_1 der ersten Kolbenfeder 33 und steigt durch über den Weg s linear bis zu einem Weg s_II mit einer Kraft F_I an. Durch Zuschalten der zweiten Kolbenfeder 38 bei s_I (Ventilstellung II) steigt die Kraft sprunghaft um die Vorspannkraft FV_2 der zweiten Kolbenfeder 38 auf einen Wert F_II an. Die weitere Federkennlinie ist nun eine Parallelschaltung der Kolbenfedern 33 und 38. Die Aktorkraft zur Ansteuerung der Mittelstellung s_II (Ventilstellung II) kann beliebig zwischen den Kräften F_I und F_II liegen. Entsprechend kann die Bestromung des Schaltmagneten vergleichsweise ungenau sein, die Ventilstellung II wird trotzdem sicher angefahren.

Fig. 11 zeigt ein Ausführungsbeispiel eines erfindungsgemäßen hydraulischen Systems mit einem Rückschlagventil 35 zwischen dem Öleinlass 3 der Nasskupplung 2 und dem Knotenpunkt 39. Dargestellt ist hier der Übersichtlichkeit halber nur die hydraulische Beschaltung des Steuerventils 6 gemäß der Figuren 3 bis 6. Das Rückschlagventil 35 öffnet in Fließrichtung von dem Knotenpunkt 39 zum Öleinlass 3 und sperrt den Durchfluss in die Gegenrichtung. Das Rückschlagventil 35 hat einen geringen Öffnungsdruck von z.B. 0,2 bar. Der Öffnungsdruck ist so ausgelegt, dass in Betriebssituationen, in denen die Nasskupplung 2 einen Saugdruck aufbaut, das Öl in Ventilstellung II sicher der Saugseite 10 der Pumpe 8 zugeführt werden kann. Der Öffnungsdruck ist dazu höher als der von der Nasskupplung 2 maximal aufbaubare Saug(unter-)druck an dem Öleinlass 3. Dadurch schließt das Rückschlagventil 35 sobald das Steuerventil 6 in der Ventilstellung II ist.

### Bezugszeichenliste

- 1: Hydraulisches System
- 2: Nasskupplung
- 3: Öleinlass
- 4: Ölauslass
- 5: Ölreservoir
- 6: Steuerventil
- 7: Druckseite
- 8: Pumpe
- 9: Ölkühler
- 10: Saugseite
- 11: Ölfilter
- 12: Drossel
- 13: Pfeil
- 14: Federteller
- 15: Federmitnehmer
- 16: Schaltmagnet
- 17: Ventilkolben
- 18: Saugdrossel
- 19: Lamellen
- 20: Steuerkante
- 21: Umlaufende Ringnut
- 22: Bohrung
- 23: Axialbohrung
- 24: Zweite Bohrung
- 25: Zweite umlaufende Ringnut
- 26: Steuerkanten
- 27: Schraubstopfen
- 28: Bohrung
- 29: Ventilgehäuse
- 30: Schaltmagnet
- 31: Pfeil
- 32: Zapfen
- 33: Erste Kolbenfeder
- 34: Weiterer Zapfen
- 35: Rückschlagventil
- 36: Stufenbohrung
- 37: Boden
- 38: Zweite Kolbenfeder
- 39: Knotenpunkt
- 40: Saugdrossel

## Patentansprüche

1. Hydraulisches System (1) zur Zufuhr eines Hydraulikfluids zu einer Nasskupplung (2), umfassend eine Pumpe (8), und ein elektromechanisch betätigtes Steuerventil (6) über das die Pumpe (8) das Hydraulikfluid aus einem Ölreservoir (5) zu der Nasskupplung (2) fördert, wobei das Steuerventil (6) ein Schaltventil ist und eine Ventilstellung (II) umfasst, bei der eine Druckseite (7) der Pumpe (8) mit einer Saugseite (10) der Pumpe (8) bzw. dem Ölreservoir (5) verbunden oder verbindbar ist, **dadurch gekennzeichnet, dass** das Steuerventil (6) ein 4/-Wegeventil ist, wobei ein Anschluss (6.1) mit dem Ölreservoir (5), ein Anschluss (6.3) mit der Saugseite (10) der Pumpe (8), ein Anschluss (6.4) mit der Druckseite (7) der Pumpe (8) und ein Anschluss (6.2) mit dem Öleinlass (3) der Nasskupplung (2) verbunden oder verbindbar ist.

2. Hydraulisches System (1) zur Zufuhr eines Hydraulikfluids zu einer Nasskupplung (2), umfassend eine Pumpe (8), und ein elektromechanisch betätigtes Steuerventil (6) über das die Pumpe (8) das Hydraulikfluid aus einem Ölreservoir (5) zu der Nasskupplung (2) fördert, wobei das Steuerventil (6) ein Schaltventil ist und eine Ventilstellung (II) umfasst, bei der eine Druckseite (7) der Pumpe (8) mit einer Saugseite (10) der Pumpe (8) bzw. dem Ölreservoir (5) verbunden oder verbindbar ist, **dadurch gekennzeichnet, dass** das Steuerventil (6) ein 3/3-Wegeventil ist, wobei ein Anschluss (6.1) mit dem Ölreservoir (5), ein Anschluss (6.3) mit der Saugseite (10) der Pumpe (8) und ein Anschluss (6.2) mit der Druckseite (7) der Pumpe (8) verbunden oder verbindbar ist, und wobei das Steuerventil (6) eine Ventilstellung (I) umfasst, bei der die Saugseite (10) der Pumpe (8) über eine Drossel (12) mit dem Ölreservoir (5) verbunden oder verbindbar ist und der mit der Druckseite (7) der Pumpe (8) verbundene Anschluss (6.2) des Schaltventils (6) gesperrt ist.

3. Hydraulisches System nach Anspruch 1 oder 2, **dadurch gekennzeichnet, dass** das Steuerventil (6) einen Ventilkolben (17) umfasst, der durch eine Feder (33, 38) mit über dem Federweg abgestufter Federkennlinie in eine Ruhestellung (I) gedrückt wird.

4. Hydraulisches System nach Anspruch 3, **dadurch gekennzeichnet, dass** die Feder (33, 38) mit über dem Federweg abgestufter Federkennlinie eine Parallelschaltung mindestens zweier Federn (33, 38) ist, wobei eine der Federn erst nach Überschreiten eines bestimmten Weges (s_II) des Ventilkolbens (17) betätigt wird.

5. Hydraulisches System nach einem der Ansprüche 2 bis 4, **dadurch gekennzeichnet, dass** das Steuerventil (6) eine Ventilstellung (II) umfasst, bei der die Druckseite (7) der Pumpe (8) mit der Saugseite (10) der Pumpe (8) verbunden ist und der mit dem Ölreservoir (5) verbundene Anschluss (6.1) des Schaltventils (6) gesperrt ist oder mit der Druckseite (7) bzw. Saugseite (10) der Pumpe (8) verbunden ist.

6. Hydraulisches System nach einem der Ansprüche 2 bis 5, **dadurch gekennzeichnet, dass** das Steuerventil (6) eine Ventilstellung (III) umfasst, bei der die Saugseite (10) der Pumpe (8) gedrosselt mit dem Ölreservoir (5) verbunden ist und der mit der Druckseite (7) der Pumpe (8) verbundene Anschluss (6.2) des Schaltventils (6) gesperrt ist.

7. Hydraulisches System nach einem der vorhergehenden Ansprüche, **dadurch gekennzeichnet, dass** dieses einen Ölkühler (9) umfasst, wobei ein Abzweig zur Verbindung der Druckseite (7) der Pumpe (8) mit dem Steuerventil (6) in Durchflussrichtung hinter dem Ölkühler (9) angeordnet ist.

8. Hydraulisches System nach einem der vorhergehenden Ansprüche, **dadurch gekennzeichnet, dass** dieses einen Ölfilter (11) umfasst.

9. Hydraulisches System nach einem der vorhergehenden Ansprüche, **dadurch gekennzeichnet, dass** auf der Saugseite (10) der Pumpe (8) eine Saugdrossel (18) angeordnet ist.

10. Hydraulisches System nach Anspruch 9, **dadurch gekennzeichnet, dass** die Saugdrossel (18) stromab des Schaltventils (6) angeordnet ist.

11. Hydraulisches System nach einem der vorhergehenden Ansprüche, **dadurch gekennzeichnet, dass** an dem Öleinlass (3) der Nasskupplung (2) ein Rückschlagventil (35) angeordnet ist.

12. Hydraulisches System nach Anspruch 11, **dadurch gekennzeichnet, dass** das Rückschlagventil zwischen dem Öleinlass (3) der Nasskupplung (2) und einem Knotenpunkt (39) angeordnet ist.

13. Hydraulisches System nach Anspruch 12, **dadurch gekennzeichnet, dass** das Rückschlagventil (35) in Durchtlussrichtung von dem Knotenpunkt (39) zum Öleinlass (3) öffnet.

14. Hydraulisches System nach Anspruch 13, **dadurch gekennzeichnet, dass** das Rückschlagventil (35) in Durchflussrichtung bei einem Minimaldruck (p_min) öffnet, wobei der Minimaldruck (p_min) größer als der maximale Saugdruck der Nasskupplung (2) ist.

15. Hydraulisches System nach Anspruch 14, **dadurch gekennzeichnet, dass** der Minimaldruck (p_min) etwa 0,2 bar beträgt.

16. Steuerventil zur Verwendung in einem hydraulischen System nach einem der Ansprüche 1 bis 13, **dadurch gekennzeichnet, dass** das Steuerventil (6) einen Ventilkolben (17) umfasst, der durch eine Feder (33, 38) mit über dem Federweg abgestufter Federkennlinie in eine Ruhestellung (I) gedrückt wird.

17. Steuerventil nach Anspruch 16, **dadurch gekennzeichnet, dass** die Feder (33, 38) mit über dem Federweg abgestufter Federkennlinie eine Parallelschaltung mindestens zweier Federn (33, 38) ist, wobei eine der Federn erst nach Überschreiten eines bestimmten Weges (s_II) des Ventilkolbens (17) betätigt wird.

18. Steuerventil nach Anspruch 17, **dadurch gekennzeichnet, dass** das Steuerventil (6) ein 3/-Wegeventil ist, wobei ein Anschluss (6.1) mit dem Ölreservoir (5), ein Anschluss (6.3) mit der Saugseite (10) der Pumpe (8) und ein Anschluss (6.2) mit der Druckseite (7) der Pumpe (8) verbunden Ist.

19. Steuerventil nach Anspruch 17, **dadurch gekennzeichnet, dass** das Steuerventil (6) eine Ventilstellung (I) umfasst, bei der die Saugseite (10) der Pumpe (8) über eine Drossel (12) mit dem Ölreservoir (5) verbunden ist und der mit der Druckseite (7) der Pumpe (8) verbundene Anschluss (6.2) des Schaltventils (6) gesperrt Ist sowie eine Ventilstellung (II), bei der die Druckseite (7) der Pumpe (8) mit der Saugseite (10) der Pumpe (8) verbunden ist und der mit dem Ölreservoir (5) verbundene Anschluss (6.1) des Schaltventils (6) gesperrt ist und eine Ventilstellung (III), bei der die Saugseite (10) der Pumpe (8) gedrosselt mit dem Ölreservoir (5) verbunden ist und der mit der Druckseite (7) der Pumpe (8) verbundene Anschluss (6.2) des Schaltventils (6) gesperrt ist oder mit der Druckseite (7) bzw. Saugseite (10) der Pumpe (8) verbunden ist.

20. Steuerventil nach Anspruch 16, **dadurch gekennzeichnet, dass** das Steuerventil (6) ein 4/-Wegeventil, insbesondere ein 413-Wegeventil, ist, wobei ein Anschluss (6.1) mit dem Ölreservoir (5), ein Anschluss (6.3) mit der Saugseite (10) der Pumpe (8), ein Anschluss (6.4) mit der Druckseite (7) der Pumpe (8) und ein Anschluss (6.2) mit dem Öleinlass (3) der Nasskupplung (2) verbunden ist.

## Claims

1. Hydraulic system (1) for supplying a hydraulic fluid to a wet clutch (2), comprising a pump (8) and comprising an electromechanically actuated control valve (6) via which the pump (8) delivers the hydraulic fluid from an oil reservoir (5) to the wet clutch (2), wherein the control valve (6) is a switching valve and comprises a valve position (II) in which a pressure side (7) of the pump (8) is or can be connected to a suction side (10) of the pump (8) or to the oil reservoir (5), **characterized in that** the control valve (6) is a 4/- directional valve, wherein one port (6.1) is or can be connected to the oil reservoir (5), one port (6.3) is or can be connected to the suction side (10) of the pump (8), one port (6.4) is or can be connected to the pressure side (7) of the pump (8), and one port (6.2) is or can be connected to the oil inlet (3) of the wet clutch (2).

2. Hydraulic system (1) for supplying a hydraulic fluid to a wet clutch (2), comprising a pump (8) and comprising an electromechanically actuated control valve (6) via which the pump (8) delivers the hydraulic fluid from an oil reservoir (5) to the wet clutch (2), wherein the control valve (6) is a switching valve and comprises a valve position (II) in which a pressure side (7) of the pump (8) is or can be connected to a suction side (10) of the pump (8) or to the oil reservoir (5), **characterized in that** the control valve (6) is a 3/3 directional valve, wherein one port (6.1) is or can be connected to the oil reservoir (5), one port (6.3) is or can be connected to the suction side (10) of the pump (8), and one port (6.2) is or can be connected to the pressure side (7) of the pump (8), and wherein the control valve (6) comprises a valve position (I) in which the suction side (10) of the pump (8) is or can be connected via a throttle (12) to the oil reservoir (5) and in which that port (6.2) of the switching valve (6) which is connected to the pressure side (7) of the pump (8) is blocked.

3. Hydraulic system according to Claim 1 or 2, **characterized in that** the control valve (6) comprises a valve piston (17) which is pushed into a rest position (I) by a spring (33, 38) with a spring characteristic curve which is stepped over the course of the spring travel.

4. Hydraulic system according to Claim 3, **characterized in that** the spring (33, 38) with spring characteristic curve which is stepped over the course of the spring travel is a parallel connection of at least two springs (33, 38), wherein one of the springs is actuated only after a certain travel (s_II) of the valve piston (17) is exceeded.

5. Hydraulic system according to one of Claims 2 to 4, **characterized in that** the control valve (6) comprises a valve position (II) in which the pressure side (7) of the pump (8) is connected to the suction side (10) of the pump (8) and in which that port (6.1) of the switching valve (6) which is connected to the oil reservoir (5) is blocked or is connected to the pressure side (7) and/or suction side (10) of the pump (8).

6. Hydraulic system according to one of Claims 2 to 5, **characterized in that** the control valve (6) comprises a valve position (III) in which the suction side (10) of the pump (8) is connected in a throttled manner to the oil reservoir (5) and in which that port (6.2) of the switching valve (6) which is connected to the pressure side (7) of the pump (8) is blocked.

7. Hydraulic system according to one of the preceding claims, **characterized in that** it comprises an oil cooler (9), wherein a branch for connecting the pressure side (7) of the pump (8) to the control valve (6) is arranged downstream of the oil cooler (9) as viewed in the throughflow direction.

8. Hydraulic system according to one of the preceding claims, **characterized in that** it comprises an oil filter (11).

9. Hydraulic system according to one of the preceding claims, **characterized in that** a suction throttle (18) is arranged on the suction side (10) of the pump (8).

10. Hydraulic system according to Claim 9, **characterized in that** the suction throttle (18) is arranged downstream of the switching valve (6).

11. Hydraulic system according to one of the preceding claims, **characterized in that** a check valve (35) is arranged at the oil inlet (3) of the wet clutch (2).

12. Hydraulic system according to Claim 11, **characterized in that** the check valve is arranged between the oil inlet (3) of the wet clutch (2) and a junction point (39).

13. Hydraulic system according to Claim 12, **characterized in that** the check valve (35) opens in the throughflow direction from the junction point (39) toward the oil inlet (3).

14. Hydraulic system according to Claim 13, **characterized in that** the check valve (35) opens in the throughflow direction at a minimum pressure (p_min), wherein the minimum pressure (p_min) is greater than the maximum suction pressure of the wet clutch (2).

15. Hydraulic system according to Claim 14, **characterized in that** the minimum pressure (p_min) is approximately 0.2 bar.

16. Control valve for use in a hydraulic system according to one of Claims 1 to 13, **characterized in that** the control valve (6) comprises a valve piston (17) which is pushed into a rest position (I) by a spring (33, 38) with a spring characteristic curve which is stepped over the course of the spring travel.

17. Control valve according to Claim 16, **characterized in that** the spring (33, 38) with spring characteristic curve which is stepped over the course of the spring travel is a parallel connection of at least two springs (33, 38), wherein one of the springs is actuated only after a certain travel (s_II) of the valve piston (17) is exceeded.

18. Control valve according to Claim 17, **characterized in that** the control valve (6) is a 3/- directional valve, wherein one port (6.1) is connected to the oil reservoir (5), one port (6.3) is connected to the suction side (10) of the pump (8) and one port (6.2) is connected to the pressure side (7) of the pump (8).

19. Control valve according to Claim 17, **characterized in that** the control valve (6) comprises a valve position (I) in which the suction side (10) of the pump (8) is connected via a throttle (12) to the oil reservoir (5) and in which that port (6.2) of the switching valve (6) which is connected to the pressure side (7) of the pump (8) is blocked, a valve position (II) in which the pressure side (7) of the pump (8) is connected to the suction side (10) of the pump (8) and in which that port (6.1) of the switching valve (6) which is connected to the oil reservoir (5) is blocked, and a valve position (III) in which the suction side (10) of the pump (8) is connected in a throttled manner to the oil reservoir (5) and in which that port (6.2) of the switching valve (6) which is connected to the pressure side (7) of the pump (8) is blocked or is connected to the pressure side (7) and/or suction side (10) of the pump (8).

20. Control valve according to Claim 16, **characterized in that** the control valve (6) is a 4/- directional valve, in particular a 4/3 directional valve, wherein one port (6.1) is connected to the oil reservoir (5), one port (6.3) is connected to the suction side (10) of the pump (8), one port (6.4) is connected to the pressure side (7) of the pump (8), and one port (6.2) is connected to the oil inlet (3) of the wet clutch (2).

## Revendications

1. Système hydraulique (1) pour la fourniture d'un fluide hydraulique à un embrayage humide (2), comprenant une pompe (8) et une soupape de distribution (6) à commande électromécanique par laquelle la pompe (8) transporte le fluide hydraulique à partir d'un réservoir d'huile (5) jusqu'à l'embrayage humide (2), dans lequel la soupape de distribution (6) est une soupape de commande et comprend une position de soupape (II), dans laquelle un côté de refoulement (7) de la pompe (8) est ou peut être raccordé à un côté d'aspiration (10) de la pompe (8) ou au réservoir d'huile (5), **caractérisé en ce que** la soupape de distribution (6) est une soupape à quatre voies, dans lequel un raccord (6.1) est ou peut être raccordé au réservoir d'huile (5), un raccord (6.3) est ou peut être raccordé au côté d'aspiration (10) de la pompe (8), un raccord (6.4) est ou peut être raccordé au côté de refoulement (7) de la pompe (8) et un raccord (6.2) est ou peut être raccordé à une entrée d'huile (3) de l'embrayage humide (2).

2. Système hydraulique (1) pour la fourniture d'huile hydraulique à un embrayage humide (2), comprenant une pompe (8) et une soupape de distribution (6) à commande électromécanique par laquelle la pompe (8) transporte le fluide hydraulique à partir d'un réservoir d'huile (5) jusqu'à l'embrayage humide (2), dans lequel la soupape de distribution (6) est une soupape de commande et comprend une position de soupape (II), dans laquelle un côté de refoulement (7) de la pompe (8) est ou peut être raccordé à un côté d'aspiration (10) de la pompe (8) ou au réservoir d'huile (5), **caractérisé en ce que** la soupape de distribution (6) est une soupape à 3/3 voies, dans lequel dans lequel un raccord (6.1) est ou peut être raccordé au réservoir d'huile (5), un raccord (6.3) est ou peut être raccordé au côté d'aspiration (10) de la pompe (8) et un raccord (6.2) est ou peut être raccordé au côté de refoulement (7) de la pompe (8), et dans lequel la soupape de distribution (6) comprend une position de soupape (I), dans laquelle le côté d'aspiration (10) de la pompe (8) est ou peut être raccordé au réservoir d'huile (5) via une vanne d'étranglement (12) et le raccord (6.2) de la soupape de commande (6) raccordé au côté de refoulement (7) de la pompe (8) est fermé.

3. Système hydraulique selon la revendication 1 ou 2, **caractérisé en ce que** la soupape de distribution (6) comprend un piston de soupape (17), qui est poussé dans une position de repos (I) par un ressort (33, 38) présentant une caractéristique élastique étagée sur la course du ressort.

4. Système hydraulique selon la revendication 3, **caractérisé en ce que** le ressort (33, 38) présentant une caractéristique élastique étagée sur la course du ressort est un montage parallèle d'au moins deux ressorts (33, 38), dans lequel un des ressorts n'entre en action qu'après dépassement d'une course prédéterminée (s_II) du piston de soupape (17).

5. Système hydraulique selon l'une quelconque des revendications 2 à 4, **caractérisé en ce que** la soupape de distribution (6) comprend une position de soupape (II), dans laquelle le côté de refoulement (7) de la pompe (8) est raccordé au côté d'aspiration (10) de la pompe (8) et le raccord (6.1) de la soupape de commande (6) raccordé au réservoir d'huile (5) est fermé ou est raccordé au côté de refoulement (7) ou au côté d'aspiration (10) de la pompe (8).

6. Système hydraulique selon l'une quelconque des revendications 2 à 5, **caractérisé en ce que** la soupape de distribution (6) comprend une position de soupape (III), dans laquelle le côté d'aspiration (10) de la pompe (8) est raccordé avec étranglement au réservoir d'huile (5) et le raccord (6.2) de la soupape de commande (6) raccordé au côté de refoulement (7) de la pompe (8) est fermé.

7. Système hydraulique selon l'une quelconque des revendications précédentes, **caractérisé en ce que** celui-ci comprend un refroidisseur d'huile (9), dans lequel une dérivation destinée à relier le côté de refoulement (7) de la pompe (8) à la soupape de distribution (6) est disposée après le refroidisseur d'huile (9) dans la direction d'écoulement.

8. Système hydraulique selon l'une quelconque des revendications précédentes, **caractérisé en ce que** celui-ci comprend un filtre à huile (11).

9. Système hydraulique selon l'une quelconque des revendications précédentes, **caractérisé en ce qu'**un étranglement d'aspiration (18) est disposé sur le côté d'aspiration (10) de la pompe (8).

10. Système hydraulique selon la revendication 9, **caractérisé en ce que** l'étranglement d'aspiration (18) est disposé en aval de la soupape de commande (6).

11. Système hydraulique selon l'une quelconque des revendications précédentes, **caractérisé en ce qu'**un clapet anti-retour (35) est disposé sur l'entrée d'huile (3) de l'embrayage humide (2).

12. Système hydraulique selon la revendication 11, **caractérisé en ce que** le clapet anti-retour (35) est disposé entre l'entrée d'huile (3) de l'embrayage humide (2) et un noeud (39).

13. Système hydraulique selon la revendication 12, **caractérisé en ce que** le clapet anti-retour (35) s'ouvre dans la direction d'écoulement du noeud (39) vers l'entrée d'huile (3).

14. Système hydraulique selon la revendication 13, **caractérisé en ce que** le clapet anti-retour (35) s'ouvre dans la direction d'écoulement pour une pression minimale (p_min), dans lequel la pression minimale (p_min) est supérieure à la pression d'aspiration maximale de l'embrayage humide (2).

15. Système hydraulique selon la revendication 14, **caractérisé en ce que** la pression minimale (p_min) vaut environ 0,2 bar.

16. Soupape de distribution à utiliser dans un système hydraulique selon l'une quelconque des revendications 1 à 13, **caractérisée en ce que** la soupape de distribution (6) comprend un piston de soupape (17), qui est poussé dans une position de repos (I) par un ressort (33, 38) présentant une caractéristique élastique étagée sur la course du ressort.

17. Soupape de distribution selon la revendication 16, **caractérisée en ce que** le ressort (33, 38) présentant une caractéristique élastique étagée sur la course du ressort est un montage parallèle d'au moins deux ressorts (33, 38), dans laquelle un des ressorts n'entre en action qu'après dépassement d'une course prédéterminée (s_II) du piston de soupape (17).

18. Soupape de distribution selon la revendication 17, **caractérisée en ce que** la soupape de distribution (6) est une soupape à 3 voies, dans laquelle un raccord (6.1) est raccordé au réservoir d'huile (5), un raccord (6.3) est raccordé au côté d'aspiration (10) de la pompe (8) et un raccord (6.2) est raccordé au côté de refoulement (7) de la pompe (8).

19. Soupape de distribution selon la revendication 17, **caractérisée en ce que** la soupape de distribution (6) comprend une position de soupape (I), dans laquelle le côté d'aspiration (10) de la pompe (8) est raccordé au réservoir d'huile (5) via une vanne d'étranglement (12) et le raccord (6.2) de la soupape de commande (6) raccordé au côté de refoulement (7) de la pompe (8) est fermé, ainsi qu'une position de soupape (II), dans laquelle le côté de refoulement (7) de la pompe (8) est raccordé au côté d'aspiration (10) de la pompe (8) et le raccord (6.1) de la soupape de commande (6) raccordé au réservoir d'huile (5) est fermé, et une position de soupape (III), dans laquelle le côté d'aspiration (10) de la pompe (8) est raccordé avec étranglement au réservoir d'huile (5) et le raccord (6.2) de la soupape de commande (6) raccordé au côté de refoulement (7) de la pompe (8) est fermé ou est raccordé au côté de refoulement (7) ou au côté d'aspiration (10) de la pompe (8).

20. Soupape de distribution selon la revendication 16, **caractérisée en ce que** la soupape de distribution (6) est une soupape à 4 voies, en particulier une soupape à 4/3 voies, dans laquelle un raccord (6.1) est raccordé au réservoir d'huile (5), un raccord (6.3) est raccordé au côté d'aspiration (10) de la pompe (8), un raccord (6.4) est raccordé au côté de refoulement (7) de la pompe (8) et un raccord (6.2) est raccordé à l'entrée d'huile (3) de l'embrayage humide (2).
